Europäisches Patentamt

European Patent Office

Office européen des brevets

(19)

(11) Veröffentlichungsnummer : **0 045 355**
**B1**

(12) # EUROPÄISCHE PATENTSCHRIFT

(45) Veröffentlichungstag der Patentschrift :
**15.08.84**

(51) Int. Cl.³ : **B 41 F 33/00**

(21) Anmeldenummer : **81103826.4**

(22) Anmeldetag : **19.05.81**

(54) **Vorrichtung zum Messen der Vorspannung zweier gegeneinander angestellter Zylinder.**

(30) Priorität : **31.07.80 DE 3029048**

(43) Veröffentlichungstag der Anmeldung :
**10.02.82 Patentblatt 82/06**

(45) Bekanntmachung des Hinweises auf die Patenterteilung : **15.08.84 Patentblatt 84/33**

(84) Benannte Vertragsstaaten :
**CH FR GB IT LI SE**

(56) Entgegenhaltungen :
**Keine**

(73) Patentinhaber : **M.A.N.-ROLAND Druckmaschinen
Aktiengesellschaft
Christian-Pless-Strasse 6-30
D-6050 Offenbach/Main (DE)**

(72) Erfinder : **Stegmüller, Albert
Beilingerstrasse 8
D-8904 Friedberg (DE)**
Erfinder : **Stöckl, Herbert
Erlkönigweg 35
D-8900 Augsburg 22 (DE)**
Erfinder : **Winterholler, Johann
Bergstrasse 8
D-8904 Friedberg (DE)**

**Beschreibung**

Die Erfindung betrifft eine Vorrichtung zum Messen der Vorspannung zweier unter Verwendung von Schmitzringen gegeneinander angestellter Zylinder einer Rotationsdruckmaschine.

Die bisher verwendeten Vorrichtungen zum Messen und Einstellen des zwischen zwei Druckwerkzylindern bzw. zwischen zwei Schmitzringen herrschenden Anstelldruckes arbeiteten auf der Grundlage mechanischer Meßverfahren. So ist beispielsweise aus der DE-AS 23 00 946 eine Meßvorrichtung der eingangs genannten Art bekannt, mit der die durch die zwischen den Arbeitszylindern einer Rotationsdruckmaschine herrschende Vorspannung dadurch gemessen wird, daß die infolge der Vorspannung hervorgerufene elastische Verformung der Schmitzringe in Form einer Abplattung in der Größenordnung von 0,1 bis 0,3 mm durch Einbringen von Meßwalzen unterschiedlicher Größe in den Spalt zwischen den Schmitzringen festgestellt wird. Ein Nachteil derartiger mechanischer Meßvorrichtungen liegt darin, daß sowohl Fertigungstoleranzen der mechanischen Meßmittel als auch Abweichungen der Schmitzringe von der Kreisform, z. B. infolge von Abnutzungen, das Meßergebnis verfälschen.

Aufgabe der Erfindung ist es, eine Vorrichtung zum Messen der Vorspannung zweier gegeneinander angestellter Zylinder aufzuzeigen, die auf der Basis eines elektronisch-hydraulischen Meßprinzips arbeitet.

Diese Aufgabe wird gemäß dem Kennzeichen des Anspruchs 1 gelöst. Weitere vorteilhafte Ausgestaltungen der Erfindung ergeben sich aus den Unteransprüchen und aus der Beschreibung in Verbindung mit den Zeichnungen.

Mit der erfindungsgemäßen Vorrichtung kann bei minimalem Zeitaufwand eine exakte Messung der Kräfte am Schmitzring selbst durchgeführt werden, wobei Gummitücher und Druckplatten nicht von den Zylindern entfernt werden müssen. Eine Reinigung der Schmitzringe für die Messung ist nicht erforderlich, da deren Verschmutzung das Meßergebnis nicht verfälscht. Auch geometrische Veränderungen der Schmitzringe haben keinen Einfluß auf das Meßergebnis. Durch den einfachen Aufbau der Meßstelle am Schmitzring ist die Durchführung von Messungen an unzugänglichen Stellen im Druckwerk möglich. Eine Beschädigung der Schmitzringe oder Zylinder infolge der Messung ist ausgeschlossen. Da die Ermittlung der Anstellkräfte nicht über eine direkte Wegmessung erfolgt, die naturgemäß insbesondere infolge der unvermeidlichen Fertigungstoleranzen fehlerbehaftet ist, läßt sich die Schmitzringvorspannung sehr genau ermitteln.

Im folgenden wird die Erfindung anhand von Ausführungsbeispielen im einzelnen beschrieben, wobei Bezug auf die beiliegenden Zeichnungen genommen wird. In diesen zeigen :

Figur 1 eine Schnittdarstellung der Meßstelle an einem Schmitzring,

Figur 2 eine zweite Ausführungsform einer Meßstelle an einem Schmitzring,

Figur 3 ein Blockschaltbild der Auswerte- und Anzeigeschaltung und

Figur 4 eine schematische Darstellung eines Druckwerkes mit den erfindungsgemäßen Meßstellen.

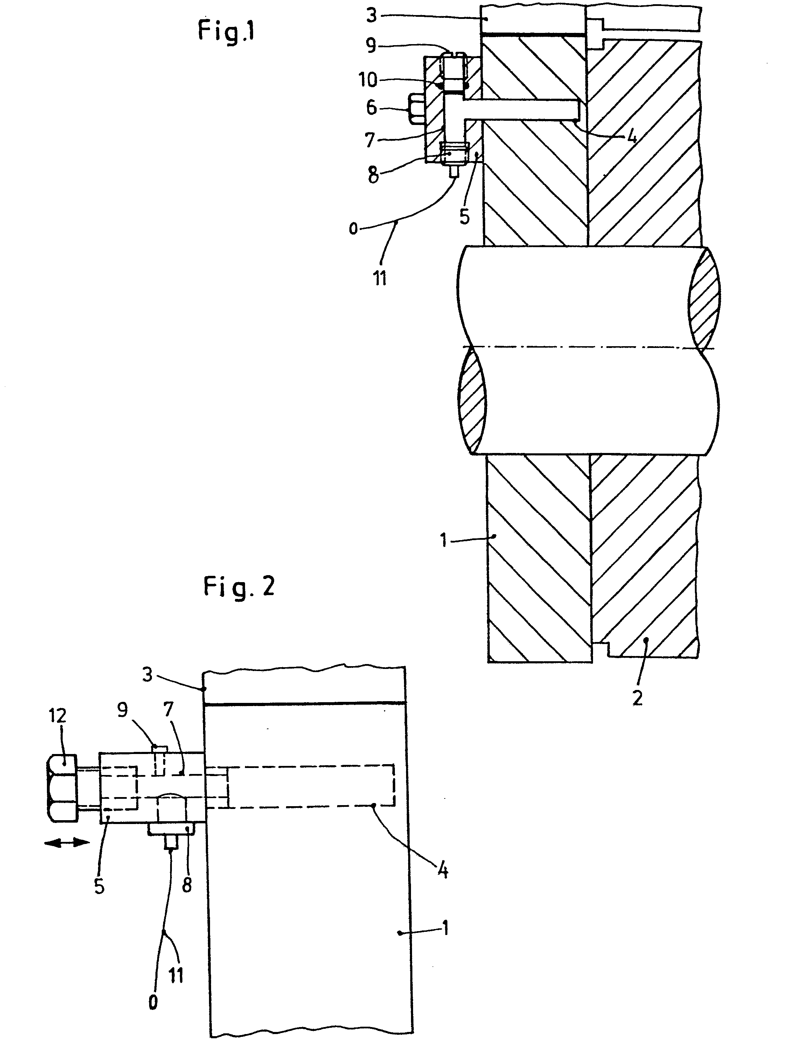

Die in Fig. 1 dargestellte Meßstelle befindet sich an einem Schmitzring 1, der auf dem nicht näher bezeichneten Achsstummel eines teilweise gezeigten Zylinders 2, beispielsweise eines Gummizylinders einer Offset-Rotationsdruckmaschine, aufgezogen ist. An diesen Schmitzring 1 ist ein weiterer Schmitzring 3 eines nicht näher bezeichneten parallel zu dem Zylinder 2 verlaufenden Zylinders angestellt, der z. B. der Plattenzylinder eines Offsetdruckwerkes sein kann.

Zur Ermittlung der Vorspannung zwischen den Schmitzringen 1 und 3 ist vorzugsweise im mantelnahen Bereich des Schmitzrings 1 eine Kammer 4 in Form einer parallel zur Achse des Schmitzringes verlaufenden Sackbohrung vorgesehen. Der Abstand der Kammer 4 zum Außenmantel des Schmitzringes 1 muß so gewählt sein, daß die elastische Verformung an der Schmitzringoberfläche infolge des Anstelldruckes sich an der Wandung der Bohrung bemerkbar macht, so daß in der Flüssigkeit eine Druckänderung feststellbar ist. Bei einem etwa 40 bis 50 mm breiten Schmitzring beträgt der Abstand der Kammer 4 von dem Außenmantel vorzugsweise 20 mm, wobei die die Kammer bildende Sackbohrung einen Durchmesser von 10 mm aufweist. Der hinter dem Boden der Sackbohrung verbleibende Materialbereich sollte mindestens 2 mm betragen. Bei einer derartigen sich achsparallel nahezu vollständig durch den Schmitzring erstreckenden Sackbohrung ergibt sich der weitere Vorteil, daß auch bei Konizität bzw. Nichtparallelität der Schmitzringlaufflächen ein exaktes Meßergebnis erzielbar ist. Grundsätzlich ist die Lage der Kammer 4 so zu wählen, daß einerseits die Kammer 4 zwar noch im Bereich der feststellbaren durch die Vorspannung hervorgerufenen Materialverformung liegt und andererseits durch die Kammer 4 die Geometrie der Lauffläche des Schmitzrings 1 nicht wesentlich beeinflußt wird.

An die Kammer 4 ist ein Adapter 5 — beispielsweise mittels Schrauben 6 — anschraubbar. Der Adapter 5 ist mit einem Hohlraum 7 ausgestattet, der beim Ansetzen des Adapters 5 an den Schmitzring 1 mit der Kammer 4 ausgerichtet ist, bzw. einen gemeinsamen Raum bildet.

Am unteren Bereich des Hohlraums 7 ist ein Aufnehmer 8, vorzugsweise ein Druckaufnehmer in Form eines Piezo-Kristalls im Adapter 5 befestigt. Der obere Bereich des Hohlraums 7 dient als Einfüllöffnung und ist durch eine Verschlußschraube 9 verschließbar. Die Verschlußschraube 9 in der Einfüll- und Entlüftungsöffnung dient desweiteren als Druckschraube.

Nachdem der Adapter zur Durchführung eines Meßvorganges an dem Schmitzring 1 angeschraubt ist, wird über die genannte Einfüllöffnung der durch die im Schmitzring 1 vorgesehene Kammer 4 und den Hohlraum 7 gebildete Raum mit einer Flüssigkeit blasenfrei gefüllt. Hierfür kann eine Hydraulikflüssigkeit oder Paraffinöl verwendet werden. Anstelle einer Flüssigkeit sind jedoch auch in äquivalenter Weise z. B. Fette, Silikon oder ähnliche inkompressible Materialien verwendbar. Nach dem Füllvorgang wird die Adapteröffnung durch Eindrehen der Verschlußschraube 9 geschlossen, wobei durch die diese umfassende sehr harte Dichtung 10 nach einem bestimmten Eindrehweg das System vollständig abdichtet.

Um die Meßempfindlichkeit der Vorrichtung zu erhöhen ist es notwendig, in der Flüssigkeit einen bestimmten statischen Vordruck einzustellen. Dieser statische Druck sollte zwischen 5 und 20 bar betragen und kann durch die Verschlußschraube 9 auf den gewünschten Wert eingestellt werden.

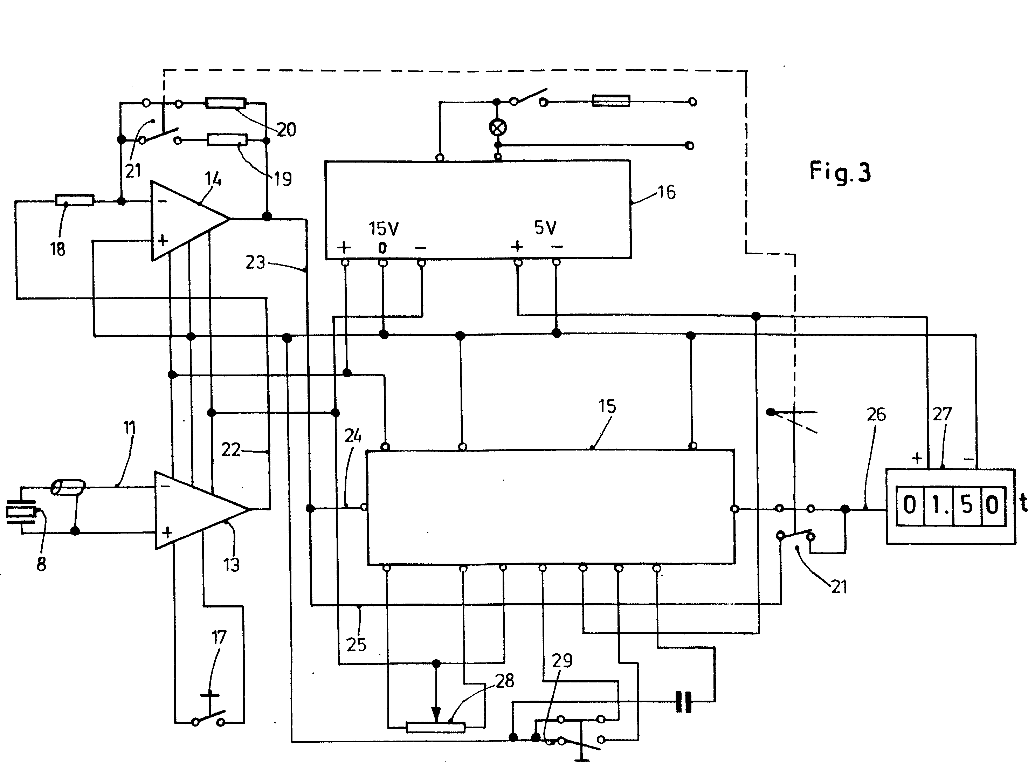

Die zwischen den Schmitzringen 1 und 3 herrschende Kraft bewirkt, wie bereits erwähnt, eine Materialdeformation in dem äußeren Bereich des Schmitzringes 1, in dem die Kammer 4 angeordnet ist. Wird nach dem vorbeschriebenen Füllvorgang der die Kammer 4 enthaltende Bereich des Schmitzringes, beispielsweise durch Drehen der Druckwerkzylinder in die in Fig. 1 gezeigte Position gebracht, bei der sich die Kammer 4 unterhalb des Schmitzringes 3 befindet, erfolgt an dieser Stelle die Deformierung des Schmitzringes 1 und bewirkt eine Druckänderung in der Flüssigkeit der Kammer 4, die durch den Aufnehmer 8 erkannt wird. Der aus einem piezoelektrischen Element bestehende Aufnehmer 8 reagiert auf diese Änderung durch Erzeugung eines elektrischen Signals, das über eine Anschlußleitung 11 einer in Fig. 3 gezeigten Auswerte- und Anzeigeschaltung zugeleitet wird.

Die in Fig. 2 gezeigte Ausführungsform der Meßstelle ist im wesentlichen identisch mit der in Fig. 1 gezeigten Ausführungsform. Zusätzlich weist jedoch der in Fig. 2 gezeigte Adapter 5 eine separate Druckschraube 12 auf, mit deren Hilfe der statische Druck in der Flüssigkeit auf den gewünschten Wert eingestellt werden kann. In diesem Fall dient die Verschlußschraube 9 lediglich als Dichtungs- und Entlüftungselement.

Die über eine abgeschirmte Anschlußleitung 11 der in Fig. 3 gezeigten Schaltung zugeführte Information in Form einer elektrischen Ladung, die im als piezoelektrischen Element ausgebildeten Aufnehmer 8 erzeugt wurde, wird in einem FET- (Feldeffekttransistor) Ladungsverstärker (13) verstärkt und gelangt als elektrische Spannung über einen Operationsverstärker 14 und einen Spitzenwertspeicher 15 an eine nachstehend noch zu beschreibende Anzeigevorrichtung.

Ein in üblicher Weise aufgebautes Netzteil 16 versorgt die vorgenannten Baueinheiten mit den entsprechenden Spannungen, beispielsweise +/− 15 Volt und +/− 5 Volt. Für Null-Abgleichzwecke ist dem FET-Ladungsverstärker 13 ein Schalter 17 zugeordnet. An den Operationsverstärker 14 erfolgt die Signalzuführung über einen Eingangswiderstand 18. Zur Veränderung des Rückkopplungsfaktors sind dem Operationsverstärker 14 zwei Rückkopplungswiderstände 19 und 20 zuschaltbar. Die Auswahl des Rückkopplungswiderstandes erfolgt mittels eines Schalters 21. Der Ausgang des FET-Ladungsverstärkers 13 ist über eine Leitung 22 mit dem genannten Eingang des Operationsverstärkers 14 verbunben. Über eine Ausgangsleitung 23 gelangt das einen bestimmten Druck identifizierende Signal entweder über eine Leitung 24 an den Spitzenwertspeicher 15 oder über eine Leitung 25 und einem weiteren Kontakt des Schalters 21 direkt auf die Eingangsleitung 26 eines Anzeigeinstrumentes, z. B. in Form eines Digitalvoltmeters 27.

Für Abgleichzwecke benötigt der Spitzenwertspeicher 15 noch den Widerstand 28, der als Potentiometer ausgebildet ist, und einen Schalter 29, mit dessen Hilfe die gespeicherte Spannung im Spitzenwertspeicher beseitigt wird und dieser auf « Null » setzbar ist.

Soll vor Beginn eines Meßvorganges nach erfolgter Füllung der Ölkammer mit einer geeigneten Flüssigkeit der statische Druck eingestellt werden, so wird durch Schließen der unteren Kontakte der beiden Kontaktpaare des Schalters 21 der über dem Operationsverstärker 14 angeordnete untere Widerstand 19 parallel zu dem Operationsverstärker 14 geschaltet, wodurch dessen Verstärkungsfaktor reduziert wird. Gleichzeitig wird durch Schließen des unteren Kontaktes des zwischen dem Spitzenwertspeicher 15 und dem Digitalvoltmeter 27 gezeigten Kontaktsatzes des Schalters 21 der Ausgang des Operationsverstärkers 14 direkt auf das Digitalvoltmeter 27 gegeben, wobei durch Öffnen des oberen Kontaktes der Ausgang des Spitzenwertspeichers 15 von dem Eingang 26 des Digitalvoltmeters 27 getrennt wird. Somit erfolgt die Anzeige des statischen Druckes am Digitalvoltmeter 27. Dieser ist mit Hilfe der Verschlußschraube 9 (Fig. 1) oder der Druckschraube 12 (Fig. 2) auf einen bestimmten Wert einstellbar.

Nach erfolgter Einstellung des statischen Druckes auf einen Wert zwischen vorzugsweise 5 und 20 Bar wird der Schalter 21 umgelegt, so daß seine Kontakte die in Fig. 3 gezeigte Stellung einnehmen. Nach erfolgter Einstellung des statischen Druckes müssen zunächst die Drucktasten 17 und 29 betätigt werden. Die Taste 17 (Reset) eliminiert im Ladungsverstärker den statischen Vordruck, so daß also die reale Vorspannkraft, angezeigt werden kann. Taste 29 muß vor jeder Messung gedrückt werden, um den Speicher auf Null zu setzen.

Bei der genannten Stellung liegt der Rückkopplungswiderstand 20 parallel zu dem Operationsverstärker 14, so daß dieser mit einem erhöhten Verstärkungsfaktor arbeitet. Desweiteren ist nun der Ausgang des Spitzenwertspeichers 15 mit der Eingangsleitung 26 des Digitalvoltmeters 27 verbunden. Die nun beim Überrollen der Meßstelle im Schmitzring 1 erzeugten Druckänderungen werden vom Aufnehmer 8 registriert und gelangen über die Anschlußleitung 11, den FET-Ladungsverstärker 13 und den Operationsverstärker 14 in den Spitzenwertspeicher 15. Der Spitzenwertspeicher 15 registriert und speichert die höchste an ihn angelegte Spannung, die den maximalen Anstelldruck bzw. die maximale zwischen den Schmitzringen 1 und 3 auftretende Vorspannung interpretiert. Diese Maximalspannung wird für eine bestimmte Zeit am Digitalvoltmeter 27 angezeigt und kann für Einstellvorgänge ausgewertet werden. Es versteht sich, daß die Anzeige des Digitalvoltmeters 27 wertmäßig in Übereinstimmung mit den tatsächlich auftretenden Kraftgrößen gebracht werden kann. So kann bei einer derartigen Normierung der Anzeige als Endwert der Anstelldruck von zwei Tonnen angezeigt werden, bei dem bei den vorangehend angegebenen Dimensionierungen des Adapters 5 und der Kammer 4 in der Flüssigkeit eine Druckänderung von 1,5 bar auftritt.

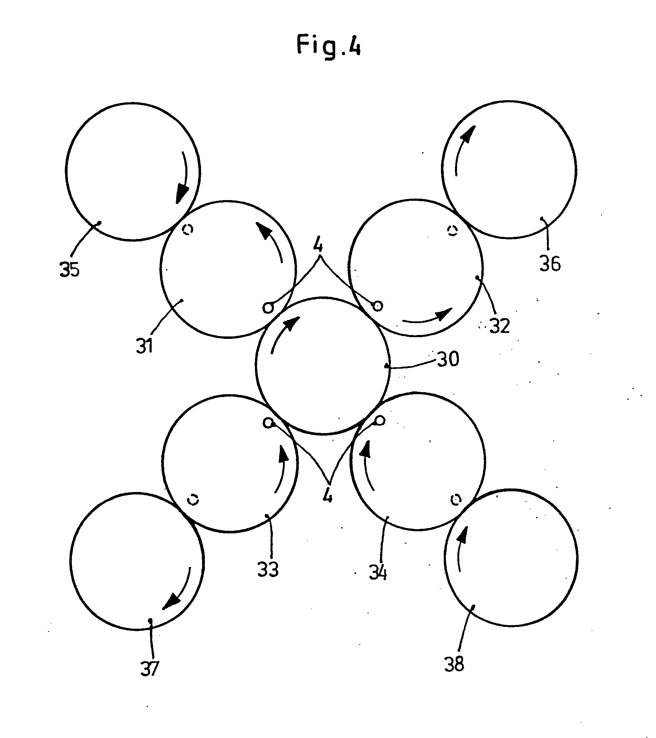

Fig. 4 zeigt schematisch ein Offsetdruckwerk, das einen Druckzylinder 30 und vier um diesen angeordnete Gummizylinder 31, 32, 33 und 34 sowie jeweils einen an einen Gummizylinder angestellten Plattenzylinder 35, 36, 37, 38 umfaßt. Durch die in Fig. 4 in einem jeden Gummizylinder 31 bis 34 verwendete Kammer 4 ist bei der in Fig. 4 gezeigten Stellung der Zylinder jeweils die zwischen einem Gummizylinder und dem Druckzylinder 30 herrschende Vorspannung meß- und einstellbar und bei einer Drehung der Zylinder um 180° kann die zwischen den Gummizylindern 31 bis 34 und den Plattenzylindern 35 bis 38 vorhandene Vorspannung gemessen und gegebenenfalls die gewünschte Vorspannung eingestellt werden.

**Ansprüche**

1. Vorrichtung zum Messen der Vorspannung zweier unter Verwendung von Schmitzringen gegeneinander angestellter Zylinder einer Rotationsdruckmaschine, dadurch gekennzeichnet, daß in einem Schmitzring (1) eine vollständig mit Flüssigkeit füllbare Kammer (4) angeordnet ist und daß ein mit der Flüssigkeit in Kontakt stehender Aufnehmer (8) vorgesehen ist, der dem Schmitzringanstelldruck entsprechende Informationen an eine Registrier- oder Anzeigevorrichtung (27) zu liefern vermag.

2. Vorrichtung nach Anspruch 1, dadurch gekennzeichnet, daß der Aufnehmer (8) ein piezoelektrischer Wandler ist.

3. Vorrichtung nach Anspruch 1 oder 2, dadurch gekennzeichnet, daß die von dem Aufnehmer (8) erzeugten elektrischen Signale über Verstärker (13, 14) einem Spitzenwertspeicher (15) zuführbar sind, der das dem höchsten jeweils gemessenen Schmitzringanstelldruck entsprechende Signal einem elektronischen Anzeigeinstrument (27) zuleitet.

4. Vorrichtung nach Anspruch 3, dadurch gekennzeichnet, daß das Anzeigeinstrument (27) ein Digitalvoltmeter ist und daß die Verstärker (13, 14) als Feldeffekttransistor-Ladungsverstärker (13) und Operationsverstärker (14) ausgebildet sind.

5. Vorrichtung nach einem der vorangehenden Ansprüche, dadurch gekennzeichnet, daß in der Flüssigkeit der Kammer (4) ein Basisdruck voreinstellbar ist.

6. Vorrichtung nach Anspruch 5, dadurch gekennzeichnet, daß zur Einstellung des Basisdruckes der Spitzenwertspeicher (15) überbrückbar und der Verstärkungsfaktor eines Verstärkers (z. B. 14) durch Änderung des Rückkopplungsfaktors veränderbar sind.

7. Vorrichtung nach einem der vorangehenden Ansprüche, dadurch gekennzeichnet, daß der Aufnehmer (8) in einem mit einem Hohlraum (7) ausgestatteten, an dem Schmitzring (1) befestigbaren Adapter (5) angeordnet ist, daß der Hohlraum (7) an die Kammer (4) ansetzbar und mit einer durch eine Verschlußschraube (9) abdichtbaren Füll- und Entlüftungsöffnung ausgestattet ist.

8. Vorrichtung nach Anspruch 7, dadurch gekennzeichnet, daß der Adapter (5) mit einer zusätzlichen in den Hohlraum (7) eingreifenden Druckschraube (12) ausgestattet ist.

9. Vorrichtung nach einem der vorangehenden Ansprüche, dadurch gekennzeichnet, daß die Kammer (4) im Schmitzring (1) als eine parallel zur Schmitzringachse verlaufende Sackbohrung ausgebildet ist.

10. Vorrichtung nach Anspruch 9, dadurch gekennzeichnet, daß der Abstand der Sackbohrung zum Außenumfang des Schmitzringes (1) 20 mm beträgt.

11. Vorrichtung nach Anspruch 9 oder 10, dadurch gekennzeichnet, daß der Durchmesser der Sackbohrung 10 mm beträgt.

12. Vorrichtung nach einem der vorangehenden Ansprüche, dadurch gekennzeichnet, daß die Flüssigkeit zur Füllung der Kammer (4) und des Hohlraumes (7) Paraffinöl oder eine Hydraulikflüssigkeit ist und unter einen Basisdruck zwischen 5 und 20 Bar setzbar ist.

13. Vorrichtung nach einem der vorangehenden Ansprüche, dadurch gekennzeichnet, daß der mit einer Kammer (4) ausgestattete Zylinder (1) ein Gummizylinder (31 bis 34) eines Offset-Rotationsdruckwerkes ist.

**Claims**

1. Device for measuring the initial stress of two cylinders of a rotary printing machine positioned against each other using bearer rings, characterised in that there is arranged in one bearer ring (1) a chamber (4), which can be filled completely with fluid, and in that a sensor (8) in contact with the fluid is provided, which supplies information concerning the bearer ring setting pressure to a recording or display instrument (27).

2. Device according to claim 1, characterised in that the sensor (8) is a piezoelectric transducer.

3. Device according to claim 1 or 2, characterised in that the electrical signals produced by the sensor (8) can be fed via amplifiers (13, 14) to a peak value store (15), which feeds the signal corresponding to the highest respective measured bearer ring setting pressure to an electronic display instrument (27).

4. Device according to claim 3, characterised in that the display instrument (27) is a digital voltmeter, and in that the amplifiers (13, 14) are designed as field-effect-transistor charge amplifiers (13) and operational amplifiers (14).

5. Device according to one of the above claims, characterised in that a base pressure can be preset in the fluid in the chamber (4).

6. Device according to claim 5, characterised in that the peak value store (15) can be by-passed to adjust the base pressure, and the amplification factor of an amplifier (e.g. 14) can be changed by changing the feedback factor.

7. Device according to one of the above claims, characterised in that the sensor (8) is arranged in an adapter (5) provided with a cavity (7) and securable to the bearer ring (1), in that the cavity (7) can be attached to the chamber (4) and is provided with a filling and ventilation aperture sealable with a screw plug (9).

8. Device according to claim 7, characterised in that the adapter (5) is fitted with a further pressure screw (12) projecting into the cavity (7).

9. Device according to one of the above claims, characterised in that the chamber (4) in the bearer ring (1) is designed as a blind bore extending parallel to the axis of the bearer ring.

10. Device according to claim 9, characterised in that the distance of the blind bore from the outer periphery of the bearer ring (1) is 20 mm.

11. Device according to claim 9 or 10, characterised in that the diameter of the blind bore is 10 mm.

12. Device according to one of the above claims, characterised in that the fluid used to fill the chamber (4) and the cavity (7) is liquid paraffin or a hydraulic fluid, and can be placed under a base pressure of between 5 and 20 bar.

13. Device according to one of the above claims, characterised in that the cylinder (1) provided with a chamber (4) is a blanket cylinder (31 to 34) of an offset rotary printing machine.

## Revendications

1. Dispositif pour mesurer la tension initiale entre deux cylindres d'une machine d'impression rotative qui sont appliqués l'un contre l'autre avec utilisation de bagues de marquage, caractérisé en ce qu'une chambre (4), pouvant être remplie complètement de liquide, est disposée dans une bague de marquage (1) et en ce qu'il est prévu un capteur (8), placé au contact du liquide et qui peut fournir des informations correspondant à la pression d'application des bagues de marquage à un dispositif d'enregistrement ou d'indication (27).

2. Dispositif selon la revendication 1, caractérisé en ce que le capteur (8) est un convertisseur piézo-électrique.

3. Dispositif selon l'une des revendications 1 ou 2, caractérisé en ce que les signaux électriques produits par le capteur (8) peuvent être appliqués par l'intermédiaire d'amplificateurs (13, 14) à une mémoire de valeurs de crête, qui applique un signal correspondant à la pression maximale, à chaque fois mesurée, d'application des bagues de marquage à un instrument indicateur électronique (27).

4. Dispositif selon la revendication 3, caractérisé en ce que l'instrument indicateur (27) est un voltmètre numérique et en ce que les amplificateurs (13, 14) sont agencés sous forme d'un amplificateur de charge à transistor à effet de champ (13) et d'un amplificateur opérationnel (14).

5. Dispositif selon l'une des revendications précédentes caractérisé en ce qu'une pression de base peut être préréglée dans le liquide de la chambre (4).

6. Dispositif selon la revendication 5, caractérisé en ce que pour un réglage de la pression de base, la mémoire de valeurs de crête (15) peut être court-circuitée et en ce que le facteur d'amplification d'un amplificateur (par exemple 14) peut être modifié par modification du facteur de couplage de réaction.

7. Dispositif selon l'une des revendications précédentes, caractérisé en ce que le capteur (8) est disposé dans un adaptateur (5) pourvu d'une cavité (7) et pouvant être fixé sur la bague de marquage (1), en ce que la cavité (7) peut être mise en place sur la chambre (4) et est pourvue d'une ouverture de remplissage et d'évent dont l'obturation étanche peut être assurée au moyen d'une vis de fermeture (9).

8. Dispositif selon la revendication 7, caractérisé en ce que l'adaptateur (5) est équipé d'une vis de pression (12) pouvant être engagée additionnellement dans la cavité (7).

9. Dispositif selon l'une des revendications précédentes, caractérisé en ce que la chambre (4) prévue dans la bague de marquage (1) est agencée sous forme d'un trou borgne orienté parallèlement à l'axe de la bague.

10. Dispositif selon la revendication 9, caractérisé en ce que la distance d'espacement entre le trou borgne et la périphérie extérieure de la bague de marquage (1) s'élève à 20 mm.

11. Dispositif selon l'une des revendications 9 ou 10, caractérisé en ce que le diamètre du trou borgne s'élève à 10 mm.

12. Dispositif selon l'une des revendications précédentes, caractérisé en ce que le liquide servant au remplissage de la chambre (4) et de la cavité (7) est de l'huile de paraffine ou un liquide hydraulique et peut être soumis à une pression de base comprise entre 5 et 20 bars.

13. Dispositif selon l'une des revendications précédentes, caractérisé en ce que le cylindre (1) pourvu d'une chambre (4) est un cylindre porte-blanchet (31, 34) d'une machine rotative d'impression offset.

Fig.1

Fig. 2

Fig. 3

0 045 355

2

## Fig.4